# EUROPEAN PATENT SPECIFICATION

(11) **EP 1 007 261 B1**
(45) Date of publication and mention of the grant of the patent: **02.04.2003**
(21) Application number: 97929324.8
(22) Date of filing: 01.07.1997
(51) Int. Cl.: B23D 61/16, B27B 33/12, B28D 1/12

(54) **BLADE CONSTRUCTION FOR A CUTTING MACHINE**
BLATTKONSTRUKTION FÜR SCHNEIDMASCHINE
CONSTRUCTION DE LAME POUR MACHINE COUPANTE

(43) Date of publication of application: 14.06.2000
(73) Proprietor: Haapasalo, Pauli, 40700 Jyväskylä (FI)
(72) Inventor: Haapasalo, Pauli, 40700 Jyväskylä (FI)
(74) Representative: Laitinen, Pauli Sakari
(86) International application number: FI9700427
(87) International publication number: WO99001247

(56) References cited:
- EP-A- 0 213 076

## Description

The object of the invention is a blade construction according to the preamble of claim 1 (see e.g. EP-A-0 213 076), to be used most advantageously in cutting machines using longitudinal blades, such as gang and band saws, in order to saw hard substances, demanding the most durable blade materials, into the required products.

Problems in sawing include wear of the blade material and the sawing waste caused by the sawing gap, the consequences of which will be dealt with in greater detail later. Blades according to the state of the art can be divided into two different types: blades, with a cutting section formed in the body of the blade, and blades, with a cutting section formed from a different material from the body of the blade and attached to the latter by e.g. brazing. The cutting section may be of e.g. hard metal or a diamond segment and given a shape determined by the material to be sawn.

It is a common property of all the aforementioned types of blade that the blade wears in use and thus requires servicing at regular intervals. Blade servicing costs for sharpening equipment, spare blades for use during servicing, servicing personnel and accommodation increase in proportion to the durability of the type of blade.

This invention is intended to achieve advantages, when compared to the above blade constructions, in the areas of the construction, servicing and use of the blade, and in the fact that it can be used in cutting machines of a lighter construction than normal .

Use of the blade construction according to the invention as defined in claim 1 has reduced the defects affecting the aforementioned state of the art devices and has created a blade construction with the characteristics appearing in the accompanying claims.

When the requirements of manufacture are taken into account, it is advantageous if the blade body is elongated, most advantageously a pre-tempered elongated steel plate, in which the requisite number of openings for attaching the cutting section are cut, most advantageously by the laser method, in horizontal and vertical rows in the blade body, while possible blade body attachment holes are cut in both ends of the blade body.

If the blade section is substantially smaller than the entire blade, it can be advantageously manufactured in large numbers and from materials with the best strength and wear resistance properties. From the point of view of the user, an advantage in the blade construction according to the invention can be seen in the fact that when the blade is serviced, only the worn blade sections, and not the blade body itself, need be removed. Because they are relatively light, their removal is rapid, thus increasing the cutting machine's availability and leading to greater yields.

Due to the relative lightness of the blade sections, they can also be serviced easily and quickly using small and light servicing devices. The reduced need for spare blades also cuts servicing costs, as only spare blade sections are required, the blade body being regarded as part of the cutting machine.

In what follows, the construction of the invention is illustrated by figures, which also illustrate the combination of the blade body and the blade section to form a complete blade.
Figure 1 shows a side view of a blade according to the invention, suitable, for example, for sawing timber;
Figure 2 shows the blade in Figure 1, seen turned through a right-angle;
Figure 3 shows another type of blade, similar to that shown in Figure 1, which is suitable for sawing stone;
Figure 4 shows a blade, according to Figure 3, in the same way as in Figure 2;
Figure 5 shows two cross-sections of a blade according to the invention;
Figure 6 is a side view of the blade body for attaching blades according to the invention;
Figure 7 shows a side view of the combination of blades and the blade body.
Figure 8 shows the entire blade seen from above, with the blade in place;
Figure 9 shows an enlarged part-view of the situation, in which the blade is set in place in the blade body;
Figure 10 shows another embodiment of the blade according to the invention, seen from two different directions; and
Figure 11 shows the blade body for the blade in Figure 10.

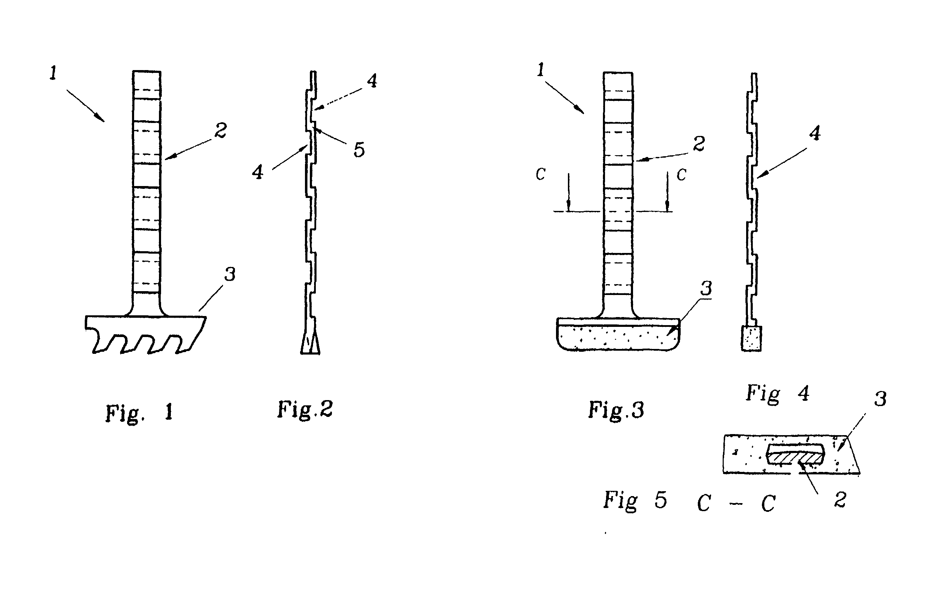

Two separate components can be distinguished in blade section 1; the blade section body 2 and the cutting section 3. Blade section 1 can be constructed, according to the application, either as a single component, as in Figure 1, or by joining the body 2 of the blade section to the cutting section 3, for example, by laser welding or brazing, as in the case in Figure 3. The above method is suitable when attaching, for example, a hard metal cutting section or a diamond matrix to the body of the blade section.

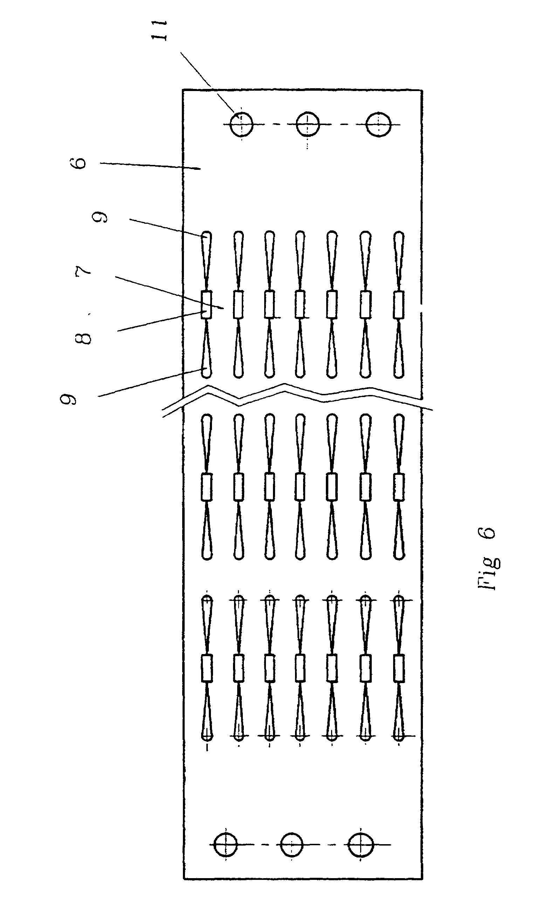

The body 2 of the blade section is shaped as an elongated, narrow and thin piece, with grooves 4 machined vertically in a longitudinal direction, alternately on each both side, leaving a length 5 of blade section body 2 with no grooves at predetermined intervals between the grooved lengths. The task of the grooves 4 is to act as attachment grooves for the attachment ridges 7 in the blade body 6, which are shown in greater detail in, for example, Figure 6, when setting the blade section into it, as will be described later.

In order that the ridge section 7 of the blade body 6 lies at a sufficient depth in the groove 4 of blade section body 2, the depth of the grooves 4 of the body 2 of the blade section is most advantageously 1/3 of the thickness of the body 2 of the blade section. The depth of groove 4 of the body 2 of the blade section is, on the other hand, dimensioned according to the thickness of the blade frame 6 in such a way that attachment ridge 7 sinks into the attachment groove 4, as described later concerning blade body 6. The length of the groove 4 of the blade section, or the width of the body 2 of the blade section, is dimensioned in such a way that attachment ridge 7 of the blade body 6 fits into the width of the groove 4 of the blade section, advantageously with no tolerance.

In terms of relative dimensions, the side sections of the largest bodies 2 of the blade section can be given a wedge shape, as can the counter surfaces of the attachment ridges 7, to ensure that the blade section is secured. The base surface of groove 4 of the blade section can be given a rounded shape, to even out the stress acting of the ridge sections 7 of the blade body 6. This is illustrated particularly in the cross-section in Figure 5.

Blade body 6, which is shown in figure 6, is manufactured from thin, ribbon-like material, most advantageously from wear-resistant high-tensile steel. Precisely-dimensioned elongated openings 8 are cut, for example using the laser method, at regular intervals horizontally and vertically in blade body 6. The openings 8 are dimensioned to correspond to the dimensions of the body 2 of the blade section in such a way that the dimension of the ridge section between the openings corresponds to the dimension of the groove 4 of the body 2 of the blade section. The height 8 of the rectangular part of the opening in the blade body corresponds to the dimension of the grooveless part 5 of the body of the blade section, while the width of the rectangular opening 8 of the blade body corresponds to the width of the body of the blade section.

Rectangular opening 8 of the blade body continues in a longitudinal direction from both ends, from half the dimension of the ends, as a wedge-like opening 9, increasing from the width of the cut gap at the start, to almost the width of the rectangle at the end. The ends of the wedge-like openings 9 are rounded. The angles remaining between the wedge-like opening parts 9 and the rectangular opening part 8, together with their retentive surfaces, act to ensure the position of blade section 1.

The thickness of the blade body 6 depends on the depth of groove 4 of the body 2 of the blade section. Most advantageously, it is as thick as the depth of the groove 4 of the blade section 1, or at most so thick that the thickness of the blade construction when ready for use is not greater than the thickness 3 of the cutting section (the sawing gap). The width of the blade body 6 is as great or greater than the length of the body 2 of the blade section. The spacing of the openings of the blade body 6 is the same as the spacing of the grooves 4 in the body 2 of the blade section.

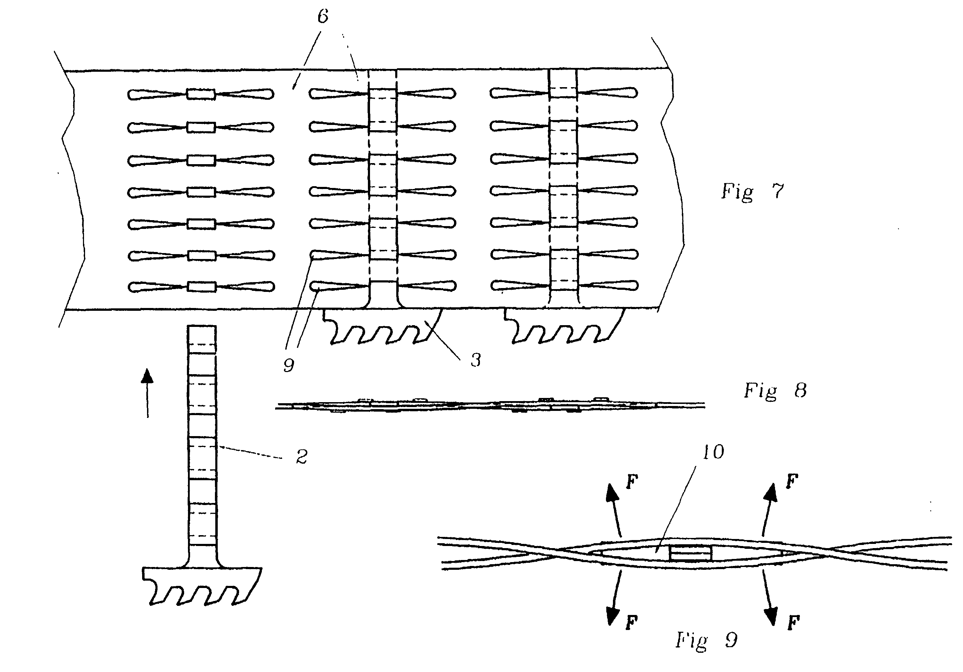

Figures 7 - 9 show how blade section 1 is set into the blade body 6. Installation takes place in such a way that blade body 6 is bent open at the cut openings with force (F), so that the ridge section 7 lying between every second opening is bent to one side of the blade body 6 and every other ridge section 7 is bent to the other side. This is illustrated in Figure 9. Body 2 of the blade section is fed, in the direction of the surface of blade body 6, into the gap 10 thus formed, and when it is in such a position that the rear of cutting section 3 touches the lower part of the blade body 6, the tension F in the blade body is released, when the ridge components 7 of the blade body 6 press the body of the blade section into the attachment groove 4, thus enclosing the blade section 1.

Figure 8 shows a construction already tightened into place, in which the blade components have been tightened into blade body 6 ready for use. Once the necessary number of blade sections 1 have been thus set into the blade body 6, the blade device can be installed in the cutting machine. When the blade device is tensioned in the cutting machine, the blade body 6 tends to straighten, so that the ridge section 7 of the blade body 6 tightens the body 2 of the blade section, ensuring that blade section 1 remains firmly attached. Attachment and the correct position are also ensured by the retention surfaces of the retention angles of the openings of the blade body 6, which are supported by the sides of the grooveless section 5 of the body 2 of the blade section.

It is obvious, that to change blade section 1, only blade body 2 need be detached from the cutting machine, while the blade section can be easily detached by carrying out the operations described above in the reverse order. In this-way, the cutting machine is easily and quickly returned to operating condition. The blade sections can be refurbished when separated from the blade body.

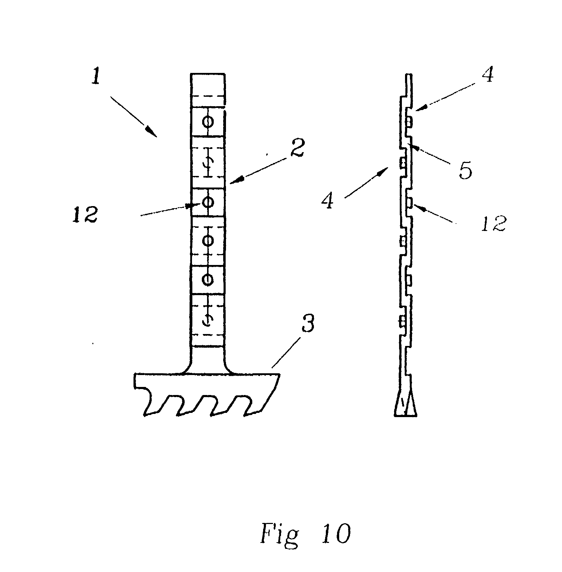

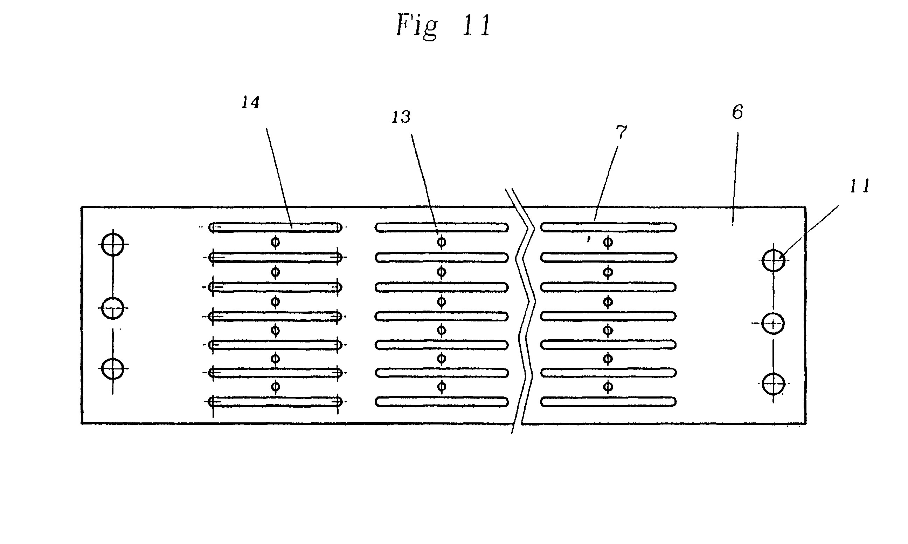

Figures 10 and 11 show another embodiment of the invention. Its basic principles are exactly the same as in the first embodiment described above, except that that now there are cutout sections 14 in blade body 6, which may be, as described, elongated openings rounded at the ends and holes 13 in section 7 of the blade body 6 between cutouts 14. The purpose of the holes 13, which are not necessarily round, can be clearly seen in figure 10, which shows that there are pins 12 corresponding to holes 13 in grooves 4, which, when blade 1 is in place in the blade body, enter holes 13 and retain the blade in position in relation to the blade body

## Claims

1. A blade construction for a cutting machine, which is formed of a blade body (6) and a blade section (1) attached to it, in which there is a body section (2) and a cutting section (3), **characterized in that** the blade section (1) and the body section (2) are formed of an elongated, generally plate-like shaft and that in the blade body (6) there are longitudinal cutouts (8, 9, 14) for each blade section set in the transverse direction on top of it, through which the shaft (2) of the blade section (1) is led alternately, to secure the blade in place.

2. A blade construction according to Claim 1, **characterized in that** there are grooves (4) in the body section (2) alternating on each side of the shaft (2) and that there are openings (8) in the cutouts in the blade body (6), the distance between which corresponds to the distance of the grooveless parts (5) of the body section (2) from one another and the height and width to corresponding dimensions of the grooveless parts (5) and that the cutouts (9) from each opening (8) continue laterally in both directions.

3. A blade construction according to Claim 2, **characterized in that** there are protrusions, such as studs (12), on the bottom of the grooves (4) of the body section (2) of the blade section (1) and that there are openings (13) corresponding to the studs (12) in the area (7) between the cutouts (14) to receive the studs when the blade (1) is set in place.

4. A blade construction according to Claim 2, **characterized in that** the opening (8) is essentially rectangular in shape and that the cutouts (9) are wedge-shaped openings and are rounded at the ends furthest from the opening (8).

5. A blade construction according to Claim 2, **characterized in that** the base surface of the grooves (4) is curved.

6. A blade construction according to Claim 2, **characterized in that** the thickness of the attachment ridge (7) between the openings (8) corresponds to the height of the grooves (4).

7. A blade construction according to Claim 1, **characterized in that** the actual blade section (3) and the body section (2) are made from the same material or from different materials.

8. A blade construction according to Claim 1, **characterized in that** the body section (2) of the blade (1) has wedge-shaped edges and that the openings (8) have suitably shaped edges.

## Revendications

1. Construction de lame pour une machine à couper formée d'un corps de lame (6) et d'une section de lame (1) y fixées, dans laquelle il existe une section de corps (2) et une section de coupage (3), **caractérisée en ce que** la section de lame (1) et la section de corps (2) sont formées d'un arbre allongé généralement en forme de plaque et **en ce que** dans le corps de lame (6) il y a des ravals longitudinaux (8, 9, 14) pour chaque section de lame réalisés sur celui-ci dans la direction transversale, par l'intermédiaire desquels l'arbre (2) de la section de lame (1) est amené, en alternance, à fixer la lame à sa place.

2. Construction de lame selon la revendication 1, **caractérisée en ce qu'**il y a des rainures (4) dans la section de corps (2) alternant sur les deux côtés de l'arbre (2) et qu'il y a des ouvertures (8) dans les ravals dans le corps de lame (6), la distance entre lesquelles correspond à la distance des parties sans rainures (5) de la section de corps (2) les unes des autres et la hauteur et la largeur correspondent à des dimensions correspondantes des parties sans rainures (5) et **en ce que** les ravals (9) de chaque ouverture (8) continuent latéralement dans les deux directions.

3. Construction de lame selon la revendication 2, **caractérisée en ce qu'**il y a des saillies, telles que des broches (12), sur le fond des rainures (4) de la section de corps (2) de la section de lame (1) et qu'il y a des ouvertures (13) qui correpondent aux broches (12) dans la zone (7) entre les ravals (14) pour recevoir les broches lorsque la lame (1) est mise à sa place.

4. Construction de lame selon la revendication 2, **caractérisée en ce que** la forme de l'ouverture (8) est sensiblement rectangulaire et que les ravals (9) sont des ouvertures en forme de coin et ils sont arrondis aux extrémités les plus éloignées de l'ouverture (8).

5. Construction de lame selon la revendication 2, **caractérisée en ce que** la surface de base des rainures (4) est courbe.

6. Construction de lame selon la revendication 2, **caractérisée en ce que** l'épaisseur de l'arête de fixation (7) entre les ouvertures (8) correspond à la hauteur des rainures (4).

7. Construction de lame selon la revendication 1, **caractérisée en ce que** la section de lame (3) et la section de corps (2) effectives sont faites à partir du même matériau ou à partir de matériaux différents.

8. Construction de lame selon la revendication 1, **caractérisée en ce que** la section de corps (2) de la lame (1) présente des bords en forme de coins et que les ouvertures (8) présentent des bords d'une forme convenable.

## Patentansprüche

1. Blattkonstruktion für eine Schneidmaschine, die gebildet wird von einem Blattkörper (6) und einem daran befestigten Blattteil (1), das einen Körperabschnitt (2) und einen Schneidabschnitt (3) aufweist, **dadurch gekennzeichnet, dass** das Blattteil (1) und der Körperabschnitt (2) aus einem langgestreckten, im allgemeinen plattenähnlichen Schaft gebildet sind und dass der Blattkörper (6) längliche Ausschnitte (8,9,14) für jedes Blattteil aufweist, die auf seiner Oberseite in Querrichtung angeordnet sind und durch die der Schaft (2) des Blattteils (1) alternierend geführt wird, um das Blatt in Stellung zu sichern.

2. Blattkonstruktion nach Anspruch 1, **dadurch gekennzeichnet, dass** der Körperabschnitt (2) alternierend auf jeder Seite des Schafts (2) Nuten (4) aufweist und in den Ausschnitten des Blattkörpers (6) Öffnungen vorhanden sind, deren Abstand dem Abstand der nutfreien Teilen (5) des Körperabschnitts (2) voneinander und deren Höhe und Breite den entsprechenden Dimensionen der nutfreien Teile (5) entspricht, und dass sich die Ausschnitte (9) von jeder Öffnung (8) seitlich in beide Richtungen fortsetzen.

3. Blattkonstruktion nach Anspruch 2, **dadurch gekennzeichnet, dass** am Boden der Nuten (4) des Körperabschnitts (2) des Blattteils (1) Vorsprünge, z. B. Stifte (12), vorhanden sind, und dass in dem Bereich (7) zwischen den Ausschnitten (14) Öffnungen (13) vorhanden sind, die den Stiften (12) entsprechen und die Stifte aufnehmen, wenn das Blatt (1) in Stellung gebracht ist.

4. Blattkonstruktion nach Anspruch 2, **dadurch gekennzeichnet, dass** die Öffnung (8) im wesentlichen von rechteckiger Form ist und dass die Ausschnitte (9) keilförmige Öffnungen sind, die an den von der Öffnung (8) entfernten Enden abgerundet sind.

5. Blattkonstruktion nach Anspruch 2, **dadurch gekennzeichnet, dass** die Bodenoberfläche der Nuten (4) gekrümmt ist.

6. Blattkonstruktion nach Anspruch 2, **dadurch gekennzeichnet, dass** die Dicke des Befestigungsstegs (7) zwischen den Öffnungen (8) der Höhe der Nuten (4) entspricht.

7. Blattkonstruktion nach Anspruch 1, **dadurch gekennzeichnet, dass** der eigentliche Blattabschnitt (3) und der Körperabschnitt (2) aus demselben Material oder aus unterschiedlichen Materialien gefertigt sind.

8. Blattkonstruktion nach Anspruch 1, **dadurch gekennzeichnet, dass** der Körperabschnitt (2) des Blatts (1) keilförmige Ränder hat und dass die Öffnungen (8) geeignet geformte Ränder aufweisen.
